Europäisches Patentamt

European Patent Office

Office européen des brevets

(11) Veröffentlichungsnummer: **0 279 907**
**A2**

(12) **EUROPÄISCHE PATENTANMELDUNG**

(21) Anmeldenummer: **87115307.8**

(22) Anmeldetag: **20.10.87**

(51) Int. Cl.⁴: **G02B 6/44**

(30) Priorität: **27.02.87 DE 3706323**

(43) Veröffentlichungstag der Anmeldung:
**31.08.88 Patentblatt 88/35**

(84) Benannte Vertragsstaaten:
**AT CH ES FR GB IT LI NL SE**

(71) Anmelder: **Kabelmetal electro Gesellschaft mit beschränkter Haftung**
**Kabelkamp 20 Postfach 260**
**D-3000 Hannover 1(DE)**

(72) Erfinder: **Rohner, Peter, Dr. rer. nat.**
**Eschenkamp 12**
**D-3004 Isernhagen 4(DE)**
Erfinder: **Ziemek, Gerhard, Dr.-Ing.**
**Bunzlauer Strasse 6**
**D-3012 Langenhagen(DE)**

(54) **Bandleitung mit Lichtwellenleitern.**

(57) Es wird eine Bandleitung (1) mit Lichtwellenleitern (2) angegeben, die zwischen zwei Bändern (3,4) einkaschiert sind. Die Bänder (3,4) haben einseitig eine klebfähige Schicht. Sie sind mit den Lichtwellenleitern (2) und zwischen denselben sowie an den Rändern miteinander verklebt. Die Bänder (3,4) haben den gleichen thermischen Ausdehnungskoeffizienten wie die Lichtwellenleiter (2). Sie bestehen vorzugsweise aus glasfaserverstärktem Kunststoff.

EP 0 279 907 A2

Die Erfindung bezieht sich auf eine Bandleitung mit Lichtwellenleitern, in welcher mindestens zwei Lichtwellenleiter parallel zueinander verlaufend und durch einen Zwischenraum voneinander getrennt in bandförmiges Trägermaterial eingebettet sind (EP-PS 0 091 717).

Lichtwellenleiter - im folgenden kurz als "LWL" bezeichnet - sind fertige Gebilde aus Glasfasern, die ohne zusätzliche Bearbeitung zur Übertragung von Lichtwellen geeignet sind. Solche LWL dienen in der Nachrichtentechnik als Ersatz der bisher üblichen metallischen Leiter. Gegenüber den metallischen Leitern haben sie einige Vorteile. Die LWL sind sehr breitbandig und dämpfungsarm. Sie sind gut biegbar und haben kleine Durchmesser. Ferner treten keine Beeinflussungen durch äußere elektrische und magnetische Störfelder auf.

Zum Einsatz der LWL für Übertragungszwecke der Nachrichtentechnik werden dieselben in LWL-Kabeln angeordnet, in welchen sie gegen mechanische Beschädigungen geschützt untergebracht sind. Die LWL können dabei als Einzelgebilde oder auch zu mehreren zusammengefaßt in eine Kabelseele eingebracht werden.

Eine Möglichkeit der Zusammenfassung der LWL vor ihrer Verarbeitung zu einem LWL-Kabel geht aus der eingangs erwähnten EP-PS 0 091 717 hervor. Die LWL sind hier in Form von Bandleitungen zusammengefaßt, die aus einem bandförmigen Träger bestehen, in dem mehrere parallel zueinander verlaufende Kanäle angebracht sind. Die LWL liegen lose in den Kanälen, in welche sie nach Fertigstellung des Trägers eingeschoben werden. Mindestens eine derartige Bandleitung ist in der Seele eines einen Schutzmantel aufweisenden Kabels angeordnet. Es ergibt sich dadurch insgesamt eine aufwendige Fertigung mit vielen Arbeitsgängen. Das gilt insbesondere auch für die Herstellung der Bandleitung selbst, für die zunächst der mit Kanälen ausgerüstete Träger gefertigt werden muß, in den die LWL danach mit großem Aufwand eingeschoben werden.

Der Erfindung liegt die Aufgabe zugrunde, ein LWL-Kabel in Form einer Bandleitung anzugeben, das einfach herstellbar und ohne weitere Schutzmaßnahmen als fertiges Gebilde verwendbar ist.

Die Aufgabe wird mit einer · Bandleitung der eingangs geschilderten Art gemäß der Erfindung dadurch gelöst, daß die LWL zwischen zwei einseitig mit einer klebfähigen Schicht versehenen Bändern einkaschiert sind, die sowohl mit den LWL als auch miteinander verklebt sind und deren thermischer Ausdehnungskoeffizient demjenigen der LWL entspricht.

Durch das Einkaschieren zwischen den beiden Bändern sind die LWL über ihre ganze Länge unverrückbar festgelegt und außerdem gut gegen Feuchtigkeit und Beschädigungen durch Biegen oder Knicken geschützt. Der Verbund aus den beiden Bändern mit den zwischen denselben liegenden LWL gibt der Bandleitung die dazu erforderliche mechanische Stabilität. Diese Stabilität bleibt bei allen Bedingungen erhalten, denen die Bandleitung ausgesetzt wird. Das gilt insbesondere auch für temperaturbedingte Einflüsse, die sich nicht negativ auswirken können, weil für die Bänder ein Material verwendet ist, dessen thermischer Ausdehnungskoeffizient demjenigen der LWL entspricht. Es kann also keine temperaturbedingten Relativbewegungen zwischen den LWL und den Bändern geben.

Die Bandleitung mit den LWL hat so gute mechanische Eigenschaften, daß sie ohne zusätzlichen Schutz als LWL-Kabel oder LWL-Leitung verwendet werden kann. Sie kann daher beispielsweise im Sinne einer Installationsleitung eingesetzt werden und dabei beispielsweise unter Tapeten, an Wänden oder unter Bodenbelägen auf dem Fußboden von Räumen verlegt werden. Dabei kann die Bandleitung mit der entsprechenden Unterlage verklebt oder bei entsprechender Gestaltung mit einem LWL-freien Streifen am Rand oder in der Mitte der Bandleitung auch durch Nägel verbunden werden. Die Bandleitung eignet sich aber auch zum Einziehen in Rohre, die in Wänden von Gebäuden vorhanden sind.

In der Bandleitung sind mindestens zwei, vorzugsweise aber auch eine größere Anzahl von LWL mit festem Abstand nebeneinander angeordnet. Sie können dadurch gegebenenfalls sehr einfach gleichzeitig durchverbunden oder an Geräte angeschlossen werden. Das gilt insbesondere dann, wenn die LWL in einem vorgegebenen Raster nebeneinander liegen.

Ein Ausführungsbeispiel des Erfindungsgegenstandes ist in den Zeichnungen dargestellt. Es zeigen:

Fig. 1 und 2 Querschnitte von unterschiedlich gestalteten Bandleitungen nach der Erfindung.

Fig. 3 eine Draufsicht auf eine Bandleitung.

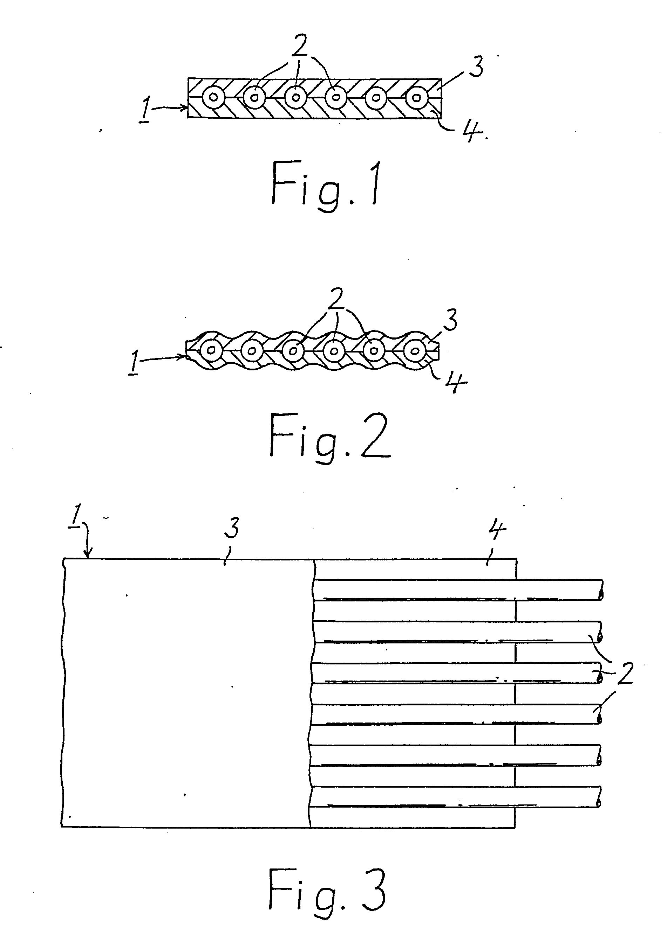

In der in den Fig. 1 bis 3 dargestellten Bandleitung 1 sind sechs LWL 2 zwischen zwei Bändern 3 und 4 einkaschiert, die einseitig mit einer klebfähigen Schicht versehen sind. Die klebfähigen Schichten der Bänder 3 und 4 sind bei der Herstellung der Bandleitung 1 einander zugekehrt, so daß sie beim Kaschierverfahren mit den LWL 2 und in den Zwischenräumen zwischen denselben sowie an den Rändern miteinander verkleben. Die Anzahl der in einer Bandleitung 1 angeordneten LWL ist beliebig. Sie richtet sich nach dem jeweiligen Verwendungszweck. In bevorzugter Ausführungsform können in einer Bandleitung 1 beispielsweise 5 bis 10 LWL 2 nebeneinander liegen.

Die in der Bandleitung 1 zusammengefaßten LWL 2 können mit entsprechenden Verbindungselementen bzw. Spleißgeräten alle gleichzeitig durchverbunden oder angeschlossen werden. Das gilt insbesondere dann, wenn die LWL 2 über die ganze Breite der Bandleitung 1 in einem vorgegebenen Raster nebeneinander liegen.

Die Bänder 3 und 4 bestehen aus einem Material, dessen Temperaturkoeffizient demjenigen der LWL 2 entspricht. Es ist dadurch erreicht, daß Temperaturschwankungen sich auf die LWL 2 nicht auswirken können. Als Material für die Bänder 3 und 4 ist in bevorzugter Ausführungsform ein beliebiger glasfaserverstärkter Kunststoff verwendet. In der Bandleitung 1 sind die LWL 2 mechanisch geschützt untergebracht. Insbesondere bei Einsatz von glasfaserverstärkten Kunststoffbändern ist die Bandleitung 1 außerdem zugfest. Durch das Einkaschieren der LWL 2 zwischen den beiden Bändern 3 und 4 ergibt sich insgesamt ein gut biegbares Gebilde, in dem die mechanisch empfindlichen LWL 2 auch bei Biegung ausreichend stabilisiert sind.

Die Bandleitung 1 wird beispielsweise wie folgt hergestellt:

Die gewünschte Anzahl von LWL 2 wird von Spulen abgezogen und parallel zueinander verlaufend einem Andrückwerkzeug zugeführt, das beispielsweise aus zwei drehbar gelagerten Walzen besteht. Die LWL 2 werden gemeinsam mit zwei Bändern 3 und 4 durch einen zwischen den beiden Walzen vorhandenen Spalt hindurchgezogen. Die beiden Bänder 3 und 4 liegen dabei auf unterschiedlichen Seiten der LWL 2. Sie haben einseitig eine klebfähige Schicht, die bei der Herstellung der Bandleitung 1 den LWL 2 zugekehrt ist.

Durch die beiden Walzen werden die Bänder 3 und 4 an die LWL 2 angedrückt. Sie verkleben dabei mit den LWL 2 und in den Zwischenräumen zwischen denselben sowie an den Rändern miteinander. Wenn für das Zusammendrücken profilierte Walzen verwendet werden, ergeben sich Bandleitungen 1 mit einem Querschnitt nach Fig. 2. Die Bänder 3 und 4 sind dabei zwischen den LWL 2 eingedrückt.

## Ansprüche

1. Bandleitung mit Lichtwellenleitern, in welcher mindestens zwei Lichtwellenleiter parallel zueinander verlaufend und durch einen Zwischenraum voneinander getrennt in bandförmiges Trägermaterial eingebettet sind, dadurch gekennzeichnet, daß die Lichtwellenleiter (2) zwischen zwei einseitig mit einer klebfähigen Schicht versehenen Bändern (3,4) einkaschiert sind, die sowohl mit den Lichtwellenleitern (2) als auch miteinander verklebt sind und deren thermischer Ausdehnungskoeffizient demjenigen der Lichtwellenleiter (2) entspricht.

2. Bandleitung nach Anspruch 1, dadurch gekennzeichnet, daß die Bänder (3,4) aus glasfaserverstärktem Kunststoff bestehen.

Fig.1

Fig.2

Fig.3